# EUROPEAN PATENT APPLICATION

(11) **EP 2 380 641 A1**
(43) Date of publication of application: **26.10.2011**
(21) Application number: 09836100.9
(22) Date of filing: 28.12.2009
(51) Int. Cl.: A63F 13/12, H04W 4/14

(54) **FUNCTIONAL MODEL OF A PLAYING SYSTEM AS A METHOD FOR CARRYING OUT AN INTERACTIVE SMS-GAME**

(30) Priority: 29.12.2008 EA 200900016
(71) Applicant: Borshchov, Viktor Nikiforovich, Moscow 129281 (RU)
(72) Inventor: Borshchov, Viktor Nikiforovich, Moscow 129281 (RU)
(74) Representative: Bucher, Ralf Christian
(86) International application number: PCT/EA2009/000011
(87) International publication number: WO 2010/075862

(57) **Abstract**

The invention is the functional model of a playing system which is based on modern SMS cellular communications and computer technologies and is used as a method for carrying out an interactive game. The distinguishing feature of said invention is that a number of additional computer devices are introduced into a system of known devices used for carrying out a gaming process, so that owing to the operation of said additional devices the playing system acquires new essential features. Thus, winners are automatically defined synchronously with the gaming process, without waiting for the end of the game, with the aid of the synchronized operation of two additional devices (12, 13) with pre-introduced parameters. SMS messages, the information parameters of which make it possible to control the protection mechanism of the gaming process against an external interference, are formed and transmitted to the players with the aid of the known devices (11, 15, 7, 6, 5, 3). The most active players and the size of their remuneration or the type of prize are automatically determined with the aid of the additional devices (23, 22) with the pre-introduced parameters. The size of monetary assets and deductions for different state, social, scientific and other purposes, which do not conflict with the state and public interests, humanitarian and moral principles, are automatically determined with the aid of the devices (14) with the pre-introduced parameters. Mass media means that coordinate the intercommunications between the game operator and the participants, inform the participants about the beginning of the game, the course of the game and the game results, are involved into the gaming process.

## Description

### Field of the Invention

The invention is a functional model of a playing system based on modem SMS cellular communications and computer technologies and is used as a method for carrying out an interactive game.

### Prior Art

The world market has a wide range of various playing systems that have undoubted advantages frequently contributed to this field by breakthroughs in science and engineering alongside many disadvantages that prevent such playing systems from being used on a large scale.

For example, the playing system disclosed in Eurasian Patent EA 2,456 B 1 uses SMS cellular communications technologies for players to interact with the playing center but is actually designed for a limited group of amateurs because it is difficult for many categories of people to play as it requires superfluous and complicated manipulations of various kinds to be performed, such as registration of game participants prior to the commencement of the game; transmission of a participant's game details to the playing center; use of a special-purpose SIM card; transfer of money to the game account, and so on. The mechanism used in this playing system to protect the game results is not reliable enough.

In a system of playing devices (*see*: specification of Patent RU 2,295,773 C2), an application for playing in an SMS game and choice of logotypes for game elements are not as difficult a method for participating in the game as the preceding playing system is, and yet, combined with a game element draw monitoring mechanism that is not reliable enough and a series of other deficiencies, they do not add much to the popularity of the game.

Lottery tickets that are central to the SMS game (*see*: specification of Eurasian Patent EA 6,072 B1) and extra manipulations to buy them, SMS messages sent to the game operator with a request for patterns to be filled with the details of the lottery tickets, to fill the lottery ticket details in the patterns received, send the patterns filled out to the game operator, and so on do not make the game sufficiently simple and convenient enough in technical terms from the participants' viewpoint. Moreover, the multiple stages needed to generate playing numbers and determine winning playing numbers in the prior art method for playing the SMS game complicate the playing process.

The method for playing an interactive game (*see*: Eurasian Patent EA 5,390 B1) is the closest (immediate) prior art of the claimed playing system, in which game participants using cellular telephones send SMS messages to a telephone number given in advance; the time when these SMS messages are received in the game computer center is recorded; serial registration numbers are assigned to the SMS messages, and the game participants are identified by the numbers of their cellular telephones. A specified algorithm is then used to select winners from the list (number) of game participants; the amount of wins is calculated, and so on. Specified amounts transferred from the subscriber accounts of game participants who are also users of cellular communications services as payment for the SMS messages they have sent are the sources of proceeds used to form a prize fund.

While it is technically simple and convenient to join in the game in the closest prior art method, selection of game winners from the list (number) of game participants is made relatively late, after a specified time, at the end of the game, which is a disadvantage of the prior at method. The mechanism activated to interlock the computer after the program has been launched is not sufficient to protect the playing process from external interference.

### Summary of the Invention

The claimed invention has been motivated by the desire to develop the model of a playing system such that it could be in greater demand and be more attractive to a broad segment of participants by improving the technical steps and operations used to operate the playing system model.

From this perspective, the present invention is an integral, well-adjusted functional model of a playing system that includes, apart from common computer devices, a series of additional devices that help automate all stages of the playing process, and that, in contrast to other playing systems, totals up the results in synchronism with the playing process without waiting for the game to end. In this sense, selecting winners instantaneously, at any time before the end of the game, is one of the principal advantages of this invention. This advantage is attained by providing two additional computer devices that practically cut out the time needed to prepare and total up the results related to the winning participants by presetting the amount of the resultant prize fund and the amount of the cash win through automatic connection between their preset parameters to fulfill this function.

Before the start of the playing process, communication is established automatically between the game center and game participants who can, by virtue of the communication, monitor the playing process protection mechanism against possible external interference. This possibility is achieved by coordinated operation of several computer devices, their coordinated interaction with the computer devices responsible for other functions in this playing system and, therefore, timely delivery of essential information to game participants.

This model of the playing system is also provided with two new functions. One of them is determining, through the additional computer devices, the most active game participants and the amounts of cash prizes or kinds of wins for them. This function appears to be quite appropriate and important because it increases the game participants' chances of receiving cash prizes and, therefore, enhances the conformity of the playing system to its intended purpose. The second additional function is using relevant computer devices to determine the percentages of amounts intended for public, social, scientific, and other purposes that are not in conflict with state and public interests, and the principles of humanity and morality, and also transfer through said additional devices the specified amounts automatically for the specified purposes. This function of the claimed invention is really vital for the interests of society and the state, which must raise demand for the claimed invention as a whole.

A point to make here is that all essential features described in this section are integral parts of a single technical conception and operate in synchronism with the playing process in a single technical embodiment.

### Brief Description of the Drawings

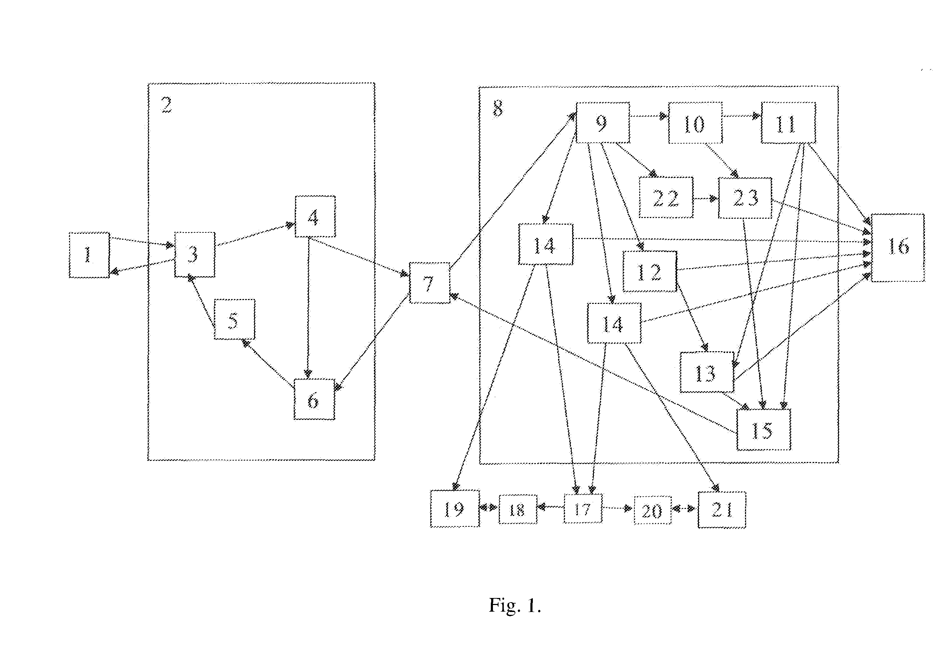

FIG. 1 is a schematic flow chart of the functional model of a playing system as a method for carrying out an interactive SMS game.

The playing system comprises a cellular telephone or another technical device (1) to send a signal in the form of an SMS message therefrom to a signal reception and redirection device (3) in a signal reception and processing system (2) of a cellular communications operator. Signal reception and redirection device (3) records the date and time of SMS message reception and transmits a signal carrying these parameters to a storage device (4) whence the signal is redirected along two paths to an automatic SMS message creating device (6) to the address of a game participant in the signal reception and processing system (2) of the cellular communications operator and to a signal reception and transmission device (7) in the game operator's server (8). The signal reception and transmission device (7) transmits the signal to a storage device (9) whence it arrives in an identifier (10) of the game participants' cellular telephone numbers, to a device (14) for automatically determining and deducting amounts from the charges collected for SMS messages received for public, social, scientific, and other purposes that are not in conflict with the interests of the state and society and the principles of humanity and morality, to a device (12) for evaluating the amount collected for use as a prize fund, and to a device (22) for determining the amounts of cash prizes or kinds of wins for the most active game participants. The device (12) for determining the amount collected sends information about the current amount collected in real time to the computer monitor (16) of the game operator or organizer, said monitor also showing in real time information received about the amounts deducted for the above purposes from device (14). Identifier (10) of game participants sends a signal to a device (11) registering the identified game participants and assigning serial numbers to them, and to a device (23) identifying the most active game participants, said device (23) also receiving a signal carrying information about the amount of cash prize or the kind of win from device (22), said information received from device (22) being transmitted, together with information about the most active game participant from device (23), in real time to computer monitor (16) of the game operator or organizer, said monitor also receiving in real time information about the number of all registered participants and their serial registration numbers transmitted from device (11). Game participants registration device (11) also transmits a signal to a device (13) that selects game winners automatically and is activated by a signal from device (12) at the time when the amount collected as a prize fund reaches a specified amount. Device (13) that selects game winners automatically is a random number generator producing a signal at the output thereof in the form of the game winning participant's serial registration number. In real time operation (before the start of the prize fund draw), a signal is transmitted from device (11) registering the identified game participants to a signal reception and redirection device (15) whence a signal carrying information about an identified game participant and his/her serial registration number is transmitted to device (7). The signal is then transmitted from device (7) to device (6) creating SMS messages automatically that creates an SMS message, together with information received from storage device (4), to indicate the date and time of an SMS message received from a game participant, and also the serial registration number assigned to that game participant. The SMS message created as above is then transmitted to SMS center (5) of the cellular communications operator whence it is forwarded through signal reception and transmission device (3) to the game participant's cellular telephone (1).

After the winner of the SMS game has been selected, a signal carrying information about his/her serial registration number is transmitted automatically in real time from device (13) to computer monitor (16) and to signal reception and redirection device (15) for further transmission thereof through devices (7), (6), (5), and (3) to mobile telephone (1) of the SMS game winner.

Signals carrying information about amounts deducted for the aforesaid purposes are transmitted from devices (14) to the relevant institutions' technical information receiving devices (19) and (21). Signals carrying information about the amounts deducted are also transmitted from devices (14) over the computer network to the computer center of an assigned bank where the amounts specified are debited to a specified account (17) and credited to bank accounts (18 and 20) of aforesaid institutions (19 and 21).

### Performance of the Invention

An announcement is made, for example, on a television channel, of the commencement of an interactive SMS game and of the size of expected wins that can reach 50,000 U.S. dollars (in the national currency equivalent), or the prize such as, for example, an apartment. Accordingly, the game operator enters the size and kind of wins before the beginning of the playing process into computer device (12) that is also loaded with the prize fund size. The prize fund may be equal, for example, to 70% of the fees charged for the SMS messages received from the game participants. If, for example, 1.43 U.S. dollars (in national currency) is charged for an SMS message, after 50 million people have sent SMS messages from their cellular telephones (1) to a specified telephone number, typically an easy manipulation for any cellular telephone owner to do at any time and in any place, device (13) would transmit automatically to computer monitor (16) information about 1,000 winning game participants. Such information would be transmitted not after the specified number of people have taken part in the game, but consecutively in real time as each next winner is selected because each successive winner would be selected in device (13) in accordance with the parameters entered into device (12) at the moment when the prize fund reaches the specified win amount as SMS messages are received from the game participants. Once this happens, said information about the results of the SMS game is broadcast on a television channel in real time. If the number of game participants reaches 50 million each three days, the number of winning game participants would reach 10,000 a month. If, however, 50 million people participate in the game every day, 30,000 people would have an opportunity to buy apartments or receive cash prizes equivalent to the prices of such apartments during a month's time. These opportunities would certainly stir enormous public interest and, therefore, can turn the game into a large-scale collective pursuit so effective and, as was said above, accessible to a wide segment of the population.

As the playing process goes on, computer devices (23) and (22) are used, in accordance with the parameters entered thereinto before the start of the game, to determine the most active game participants and the amounts of cash prizes or kinds of wins to be awarded to them. The data obtained are transmitted automatically to computer monitor (16) and also announced in real time on a television channel. If, for example, device (22) is loaded with cash prize parameters equal to 1.4% of the specified fees charged for SMS messages from game participants, and if the number of SMS messages received from game participants over a specified time period reaches 50 million, the most active game participant would receive a prize of 1,000,000 U.S. dollars (in national currency). This is certainly an additional and persuasive enough incentive to join in the SMS game.

Simultaneously with the processes developing in the playing system after it has been connected in the gaming process, deductions are made, as integral elements of the game, for various public, social, scientific, and other purposes that do not conflict with state and public interests and the principles of humanity and morality. Deductions are made in devices (14) that are loaded in advance with parameters related to the size of the deductions. If deductions to, for example, the government budget to be allocated for housing construction are fixed at 10% of the fees charged for SMS messages sent in by game participants, device (14) would transfer 214,500,000 U.S. dollars (in national currency) automatically to the government budget specifically for the above purposes over a month's time at the above rate of the playing process (50 million SMS messages a day). Furthermore, if deductions made, for examples, for the needs of pensioners and low-income families are fixed at 2.0% of the fees charged for the SMS messages received from game participants, 42,900,000 U.S. dollars (in national currency) would be transferred for these purposes over one month.

Over one year of game playing, 2,574,000,000 U.S. dollars (in national currency) would be transferred to the government budget, and 12,870,000,000 U.S. dollars (in national currency) over five years, a big enough amount to contribute to the implementation of the government program for new housing construction and repair of decrepit and unlivable housing. In turn, 514,800,000 U.S. dollars (in national currency) would be transferred to meet the needs of pensioners and low-income families over one year, or 2,574,000,000 U.S. dollars (in national currency) over five years.

Deductions can, of course, be made for other purposes as well - scientific, medical, and so on.

The inventors believe that their functional model has good prospects for recognition by society and government.

### Industrial Applicability

All countries of the world have, in the inventors' view, adequate opportunities for implementing the claimed invention. Developing cellular communications, computer technologies, and the mass media are the principal ingredients of the conditions needed to perform this invention. Every country undertaking to launch this invention would obtain significant additional financial resources to address key challenges facing the state and society, such as raising living standards, promoting industry, science, medicine, culture, and so on.

## Claims

1. A method for carrying out an interactive game based on SMS cellular communications and computer technologies in which game participants transmit SMS messages through a cellular communications network operator to the computer database of the game operator by using their personal technical communications devices (1), the time when said SMS messages are received being registered in a signal reception and processing system (2) of the cellular communications network operator; the game participants are then identified in the computer database of the game operator according to the numbers of their personal technical devices; and serial registration numbers are assigned to the game participants, wherein a device (12) is provided in the game operator's system of devices before the start of the playing process and is loaded with specified numerical information parameters of the amount collected for a prize fund as a percentage of the proceeds derived from the game in the form of fees charged for said SMS messages received from the game participants, and with relative information parameters of the kind of win associated with said parameters of the win amount; said SMS signals received from the game participants are then, after the start of the game, transmitted automatically in real time to said device, said device determining automatically in real time, with reference to said numerical information parameters of the total amount collected, a specific amount collected to be used as a prize fund, and when said amount collected as the prize fund becomes, as said SMS messages continue to be received from the game participants, equal to the specified amount of the win, a signal is sent automatically from said device to another additional device (13) that is also provided in advance, before the start of the playing process, in the game operator's system of devices and that is, in the course of the playing process, loaded automatically in real time with signals carrying information about the serial registration numbers of the game participants; said device also being loaded, before the start of the playing process, with specified parameters causing it to be activated on arrival of the aforesaid signal carrying information about the amount collected for use as the prize fund having reached an amount equal to the amount of the win, a signal being formed at the output of said last-named device used as a random number sensor in the form of a serial registration number of the winner, information about which was contained in the signal arriving at that moment in said device; said information obtained about the winner is transmitted in the form of a signal automatically in real time to a computer monitor (16) of the game operator or organizer, said computer monitor being also supplied automatically in real time with information in the form of a signal about the total number of registered game participants and about said current amount collected for use as the prize fund, such that said automatic technical operations are used to determine the game winners instantaneously, in synchronism with the playing process, and signals carrying information about the serial registration numbers of all participants together with information about the date and time of arrival of said SMS messages from them in the signal reception and processing system of the cellular communications operator are generated in the form of SMS messages containing all the above three information components and sent as SMS signals to the game participants' personal technical communications devices and providing the game participants in this manner with technically documented information as means to monitor the mechanism protecting the playing process against external interference; similar information, supplemented with information that the recipient thereof is also the winner and the amount in money equivalent and kind of the win is transmitted in real time to each winning game participant; additional devices (14) are also provided before the start of the game in the system of devices of the game operator and loaded with numerical information parameters of amounts deducted as percentages of the proceeds received from the game for public, social, scientific, and other purposes that do not conflict with state and public interests and the principles of humanity and morality; said SMS signals arriving from game participants are transmitted automatically in real time during the playing process to said devices and said devices are used to determine automatically, in accordance with said numerical information parameters, said amounts deducted for public, social, scientific, and other purposes that do not conflict with state and public interests and the principles of humanity and morality; the information received in signal form is transmitted automatically in real time to the computer monitor of the game operator or organizer, and also to the information receiving technical devices of the respective public, social, scientific, and other institutions (19 and 21) to monitor said process; signals are transmitted from said devices determining the amounts of deductions automatically in real time over the computer network, said signals being used, in accordance with the information they carry about said amounts of deductions, to withdraw the money from a specified bank account (17) and to transfer it for said purposes to bank accounts (18 and 20) of said institutions; an additional device (23) is further provided, before the start of the playing process, in the system of devices of the game operator and is loaded with specified time period parameters or parameters of a specified number of said SMS signals arriving in said device from game participants and numerical information parameters of a specified number of the most active game participants, said parameters being related to said time period parameters or said parameters of a specified number of SMS signals received from game participants are further loaded into said device; signals carrying information about identified game participants are transmitted automatically in real time to said device during the playing process, and one or several most active game participants is/are selected automatically in real time in said device depending on said time period parameters or parameters of a specified number of SMS signals received from game participants, and also depending on said parameters of the most active game participants in a specified time period, or when the number of said SMS signals received from game participants has reached a specified value and depending on the number of said SMS messages they have sent in a specified time period, or at the time when the number of said SMS signals received from game participants and when the identified details of some game participants have arrived the largest number of times in said device in the form of information carried by the signal in comparison with other game participants at the end of a specified time period or at the time when the number of said SMS signals received from game participants has reached a specified value; an additional device (22) is further provided, before the start of the playing process, in the system of devices of the game operator and is loaded with numerical information parameters, as percentages of the proceeds received from the game, in respect of cash prizes for the most active game participants in a specified time period, or when the number of said SMS signals received from game participants has reached a specified value, or relative parameters of the kinds of wins for said participants are loaded into said device; said SMS signals arriving from game participants are transmitted to said device automatically in real time during the playing process, and cash prizes or kinds of wins are determined automatically in real time in said device in accordance with said parameters for the most active game participants in said time period, or when the number of said SMS signals received from game participants has reached a specified value; information about the most active game participants selected and the cash prizes or kinds of wins for the most active game participants is transmitted automatically in real time as a signal to the computer monitor of the game operator or organizer; and said information is also transmitted automatically in real time in the form of SMS messages to the personal technical communications devices of said participants.

2. The method as claimed in claim 1, wherein the sequence of essential operations performed in said computer devices is completed in a small number of devices, such as one external signal-sensitive device or one internal multipurpose computer device.

3. The method as claimed in claim 1 or 2, wherein the playing process, including operation of said devices performing the aforesaid steps, is controlled automatically, for example, by computer.

4. The method as claimed in claim 1, or 2, or 3, wherein the mass media are involved in the playing process to announce the commencement, progress, and results of the game.
